# EUROPEAN PATENT SPECIFICATION

(11) **EP 2 608 461 B1**
(45) Date of publication and mention of the grant of the patent: **20.01.2016**
(21) Application number: 11818179.1
(22) Date of filing: 15.08.2011
(51) Int. Cl.: H04L 12/26, H04L 12/24, H04L 12/721, H04L 12/751

(54) **COMMUNICATION DEVICE, COMMUNICATION SYSTEM, COMMUNICATION METHOD, AND RECORDING MEDIUM**
KOMMUNIKATIONSVORRICHTUNG, KOMMUNIKATIONSSYSTEM, KOMMUNIKATIONSVERFAHREN UND AUFZEICHNUNGSMEDIUM
DISPOSITIF DE COMMUNICATION, SYSTÈME DE COMMUNICATION, PROCÉDÉ DE COMMUNICATION ET SUPPORT D'ENREGISTREMENT

(30) Priority: 17.08.2010 JP 2010182012
(43) Date of publication of application: 26.06.2013
(73) Proprietor: NEC Corporation, Tokyo 108-8001 (JP)
(72) Inventor: SHIKITANI, Naoki, Tokyo 108-8001 (JP)
(74) Representative: Robson, Aidan John
(86) International application number: PCT/JP2011/068518
(87) International publication number: WO 2012/023538

(56) References cited:
- JP-A- 2006 140 780
- JP-A- 2008 131 346
- KYRIAKOS ZARIFIS ET AL: "Mailing List Archives [openflow-discuss] link failure detection", INTERNET CITATION, 11 September 2009 (2009-09-11), pages 1-2, XP002648034, Retrieved from the Internet: URL:https://mailman.stanford.edu/pipermail /openflow-discuss/2009-September/000382.ht ml [retrieved on 2011-07-06]
- DESAI M ET AL: "Coping with link failures in centralized control plane architectures", COMMUNICATION SYSTEMS AND NETWORKS (COMSNETS), 2010 SECOND INTERNATIONAL CONFERENCE ON, IEEE, PISCATAWAY, NJ, USA, 5 January 2010 (2010-01-05), pages 1-10, XP031648915, ISBN: 978-1-4244-5487-7

## Description

### Technical Field

The present invention relates to a communication unit, a communication system, a communication method, and a recording medium which measure a state of a communication route.

### Background Art

In recent years, as a technique to perform route control on a communication network, a technique called "OpenFlow" is proposed in Non-Patent Literature 1. In the OpenFlow, communication is considered as an end-to-end flow, and route control, failure recovery, load balancing, and optimization are performed on a flow basis. An OpenFlow Switch (OFS) which functions as a transferring node, has a secure channel for communication with an OpenFlow Controller (OFC) and operates according to a flow table which is additionally written or a rewritten from the OFC. In the flow table, a set of a rule checked against a packet header, an action defining processing details, and flow statistic data is defined for each flow.

For example, after receiving a packet, the OFS searches the flow table for an entry which has the rule (FlowKey) matching with header data of the reception packet. When the entry which matches with the reception packet is found as a result of the search, the OFS performs processing described in an action field of the entry, on the reception packet. On the other hand, when the entry which matches with the reception packet is not found as a result of the search, the OFS transfers the reception packet or the header data of the reception packet to the OFC through the secure channel. As a result of the transfer, determination of a route of the packet based on a source and a destination of the reception packet is requested, and a flow entry for achieving the determination is received to update the flow table.

### Citation List

[Non-Patent Literature 1] OpenFlow Switch Specification Version 1.0.0 (Wire Protocol 0x01) (December 31, 2009) [searched on July 20, 2010] Internet <URL: http://www.openflowswitch.org/documents/openflow-spec-v1.0.0.pdf>
[Non-Patent Literature 2] ITU-T Recommendation Y. 1731

### Summary of the Invention

In the network using the OpenFlow described in Non-Patent Literature 1, when a route fault, conjunction and so on occur and route switching becomes necessary, it is Generally performed that OFC performs the reconfiguration of topology and route calculation to set a flow table of each OFS.

In the above-mentioned method, however, there is a problem to take time until new route is set to OFS and the route is switched, because it is necessary to perform the topology reconfiguration and the route calculation in OFC every time the route fault and the congestion occur.

An object of the present invention is to provide a communication unit, a communication system, a communication method, and a communication program, which can solve the above-mentioned.

In a view of the present invention, a communication unit which belongs to a network, includes: an adding section which adds communication state measurement data to a reception frame when the communication unit is an entry edge node of the network; a measuring section which measures a communication state based on the communication state measurement data when the communication unit is an exit edge node of the network; a measurement result notifying section which notifies a measurement result of the communication state to a control unit controlling the network; and a processing section which refers to identification data of the reception frame to perform processing of the reception frame based on a processing rule relating the identification data of the reception frame and processing for the reception frame.

In another view of the present invention, a communication system includes: the above-mentioned communication unit; a control unit, which includes: a route calculating section which calculates a route of the reception frame from the measurement result received from the communication unit; a route storage section which stores the calculated route; and a route transferring section which sets the processing rule of the frame to the communication unit on the calculated route based on the calculated route stored in the route storage section.

In another view of the present invention, a communication method includes: adding data for measurement of a communication state to a reception frame when a communication unit belonging to a network is an entry edge node of the network; measuring the communication state based on the communication state measurement data when the communication unit is an exit edge node of the network; notifying a measurement result of the communication state to a control unit which controls the network; and referring to identification data of the reception frame to perform processing of the reception frame based on a processing rule which relates the identification data of the reception frame and processing for the reception frame.

In another view of the present invention, a non-transitory recording medium is provided in which a program is stored which makes a communication unit which belongs to a network execute a communication process. The process includes: adding data for measurement of a communication state to a reception frame when the communication unit belonging to the network is an entry edge node of the network; measuring the communication state based on the communication state measurement data when the communication unit is an exit edge node of the network; notifying a measurement result of the communication state to a control unit which controls the network; and referring to identification data of the reception frame to perform processing of the reception frame based on a processing rule which relates the identification data of the reception frame and processing for the reception frame.

According to the present invention, it becomes possible to switch the route at high speed by a control server according to the communication state of the network,

### Brief Description of the Drawings

FIG. 1 is a block diagram showing a configuration of a system according to a first exemplary embodiment;
FIG. 2 is a block diagram showing a configuration of the system according to the first exemplary embodiment;
FIG. 3 is a block diagram showing a configuration of a storage section according to the first exemplary embodiment;
FIG. 4 is a block diagram showing a configuration of a control data storage section according to the first exemplary embodiment;
FIG. 5 shows a frame format in the first exemplary embodiment;
FIG. 6 shows a flow table according to the first exemplary embodiment;
FIG. 7 shows a PBB table according to the first exemplary embodiment;
FIG. 8 shows a communication state table according to the first exemplary embodiment;
FIG. 9 shows a MAC search table according to the first exemplary embodiment;
FIG. 10 is a sequence diagram showing an operation of the first exemplary embodiment;
FIG. 11 is a sequence diagram showing an operation of the first exemplary embodiment;
FIG. 12 is a sequence diagram showing an operation of the first exemplary embodiment;
FIG. 13 is a sequence diagram showing an operation of the first exemplary embodiment;
FIG. 14 is a block diagram showing a configuration of the system according to a second exemplary embodiment; and
FIG. 15 is a block diagram showing a configuration of the system according to a third exemplary embodiment.

### Description of Preferred Embodiments

### [First Exemplary Embodiment]

A first exemplary embodiment of the present invention will be described in detail below with reference to the attached drawings.

### (Overall configuration)

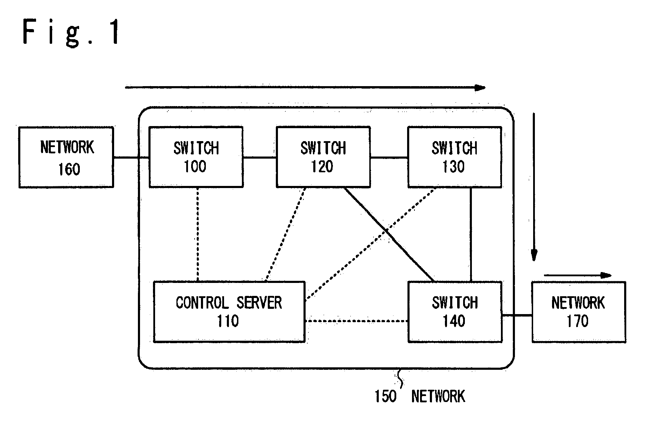

FIG. 1 is a block diagram showing a configuration of a system according to the first exemplary embodiment. The system shown in FIG. 1 includes a network 150, a network 160, and a network 170. The network 150 includes a switch 100, a switch 120, a switch 130, a switch 140, and a control server 110. An operation of the network 150 will mainly be described below. Arrows in FIG. 1 show a route of a packet (the switch 100 - the switch 120 - the switch 130 - the switch 140) which will be described in the exemplary embodiment. The control server 110 and the switches are connected as shown by dotted lines. The connection may be performed by the same network as the network connecting the switches or different dedicated lines.

Also, in the network 150, the switch 100 and the switch 140 respectively connected with the network 160 and the network 170 operate as an entry edge node and an exit edge node, respectively.

When the OpenFlow described in Non-Patent Literature 1 is applied to the network 150 shown in FIG. 1, the switches 100 to 140 correspond to OFSs and the control server 110 corresponds to an OFC, respectively.

The description will be performed below by using the OpenFlow as an example, and the extent of application of the present exemplary embodiment is not limited to the OpenFlow. A technique to centrally control a network is applicable, like the OpenFlow.

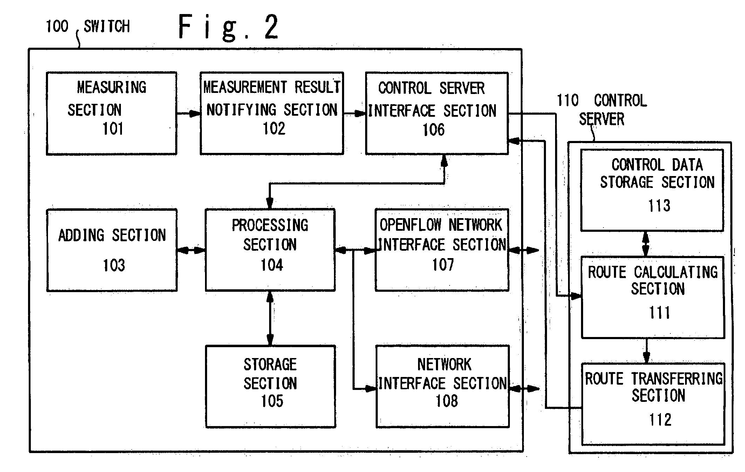

FIG. 2 is a block diagram showing a configuration of the switch 100 and the control server 110 according to the first exemplary embodiment. It should be noted that although only the configuration of the switch 100 is shown in FIG. 2, the description of the switches 120, 130, and 140 shown in FIG. 1 is omitted, because they have the same configuration as the switch 100.

### (Functions of sections in switch)

The switch 100 includes a measuring section 101, a measurement result notifying section 102, an adding section 103, a processing section 104, a storage section 105, a control server interface section 106, an OpenFlow network interface section 107, and a network interface section 108.

The measuring section 101 measures a communication state based on a sequence number included in a reception frame, a frame transmission time and so on. More specifically, a communication state is measured by calculating a frame loss rate, an average delay time, and an average reception rate. It should be noted that the measurement is performed when a switch is positioned in an exit edge node in a network. In case of the network 150 shown in FIG. 1, the measurement is performed in the switch 140.

When the measurement of the communication state is performed in the measuring section 101, the measurement result notifying section 102 transmits a measurement result to the control server 110 through the control server interface section 106.

The adding section 103 adds data necessary for transfer in the network 150 in addition to communication state measurement data (a sequence number and a frame transmission time). This is achieved in the exemplary embodiment, by using a method called PBB (Provider Backbone Bridge). However, an application example of the exemplary embodiment is not limited to the PBB, and application of a technique of encapsulating reception data (EoE: Ethernet (registered trademark) Over Ethernet) is also possible. Additionally, it is also possible to employ a method to just add the communication state measurement data and the data necessary for transfer to a reception frame.

As for the PBB, standardization work is being performed in the IEEE (The Institute of Electrical and Electronics Engineers) as a technique for a backbone network to bundle networks by using PB (Provider Bridge), which is a communication method for telecommunications carriers.

In general, an edge node is provided at a boundary between a PBB network and a PB network. In the edge node, a frame received from a PB network is converted to a MAC-in-MAC (Media Access Control) frame, and communication using a MAC-in-MAC frame is performed in a PBB network.

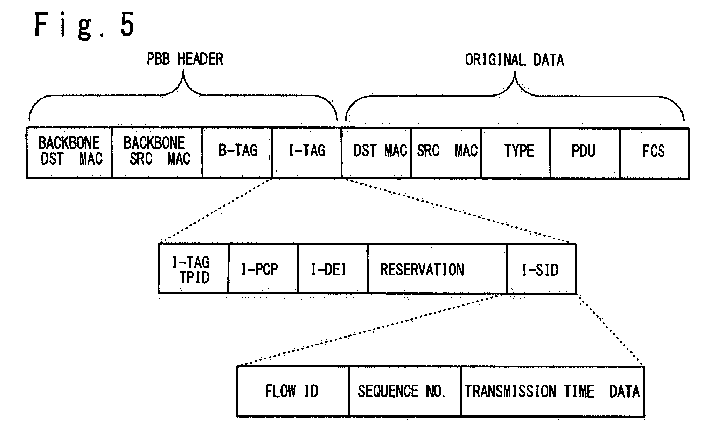

In the present exemplary embodiment, a case where the networks 160 and 170 in FIG. 1, and the network 150 are applied to a PB network and a PBB network, respectively, will be described. It should be noted that the networks 160 and 170 are not limited to the PB network but may be applied to any network. FIG. 5 shows a frame format used in the present exemplary embodiment. The frame shown in FIG. 5 is obtained by encapsulating by the adding section 103, a reception frame (original data) which includes a dst MAC (destination MAC address), a src MAC (source MAC address), a Type (Ether Type), a PDU (Protocol Data Unit), and a FCS (Frame Check Sequence: frame error detection).

As a result of the encapsulation, a PBB header is added to the original data as shown in FIG. 5. The PBB header includes a Backbone dst MAC (Backbone destination MAC address: "destination B-MAC address", hereinafter), a Backbone src MAC (Backbone source MAC address: "source B-MAC address", hereinafter), a B-TAG (Backbone VLAN Tag), and an I-TAG (Service Instance Tag). The destination B-MAC address indicates a destination MAC address of a frame used in the network 150, and the source B-MAC address indicates a source MAC address of a frame in the network 150. The B-TAG stores a B-VID (B-VLAN ID: Backbone-Virtual Local Area Network Identifier), which is an identifier of a route used in the network 150.

The I-TAG used in the present exemplary embodiment will be described. As shown in FIG. 5, the I-TAG includes an I-TAG TPID (I-TAG Protocol Identifier: I-TAG protocol ID), an I-PCP (I-TAG Priority Code Point), an I-DEI (I-TAG Drop Elligible Indication), reservation, and an I-SID (Service Instance ID).

In the present exemplary embodiment, a Flow ID, a sequence number, and transmission time data are added to a field of the I-SID as shown in FIG. 5. The Flow ID, which is added at the entry edge node of the network 150 (the switch 100 in FIG. 1), is an identifier on a flow basis in the OpenFlow. The Flow ID is controlled by the control server 110.

The sequence number is added at the entry edge node of the network 150. The sequence number is a numerical value which is incremented by one, each time a frame passing through the same path (a frame of the same flow) is transmitted. The exit edge node of the network 150 (the switch 140 in FIG. 1) monitors the numerical value, and measures a reception rate and a frame loss in a route.

The transmission time data is added in the entry edge node of the network 150. The transmission time data is acquired from a RTC (Real Time Clock: not shown in the drawings) which measures time in a device, for example. In the exit edge node, a delay time in a route is measured by comparing the transmission time data added to a frame and current time data acquired from the RTC in the device.

It is possible to select and add either a sequence number or transmission time data, so as to correspond to the determination of which of the frame loss rate, the average delay time, and average reception rate is measured. For example, the measurement is possible by adding the sequence number when only the frame loss rate is measured, and the transmission time data when the average delay time or the average reception rate is measured.

The processing section 104 processes the reception frame in accordance with a processing rule (entry) corresponding to the reception frame stored in a flow table 105-1 of the storage section 105. It should be noted that the processing rule corresponds to a flow table entry in the OpenFlow. Details of the flow table 105-1 will be described later.

More in detail, the flow table 105-1 is first searched for a processing rule corresponding to a reception frame. When the processing rule exists in the flow table 105-1, the stated processing is performed. The processing corresponds to an "Action" in the OpenFlow. The processing in the present exemplary embodiment is typically assumed to be transferred to the next switch on a transfer route of the reception frame, but is not limited to the transfer. Examples of the processing other than the transfer are unicast, multicast, discard control, load balancing control, failure recovery control, virtual port · tunnel transfer control, and encryption.

When the processing rule does not exist in the flow table 105-1, an inquiry is transmitted to the control server 110 about processing of the reception frame through the control server interface section 106. This operation corresponds to "Packet-in" in the OpenFlow.

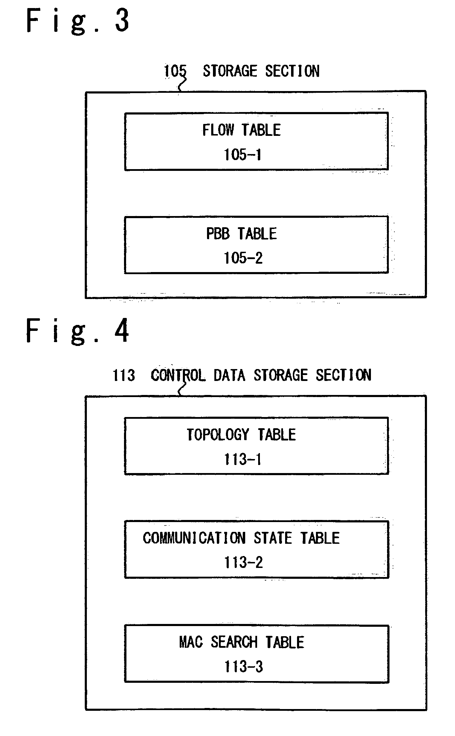

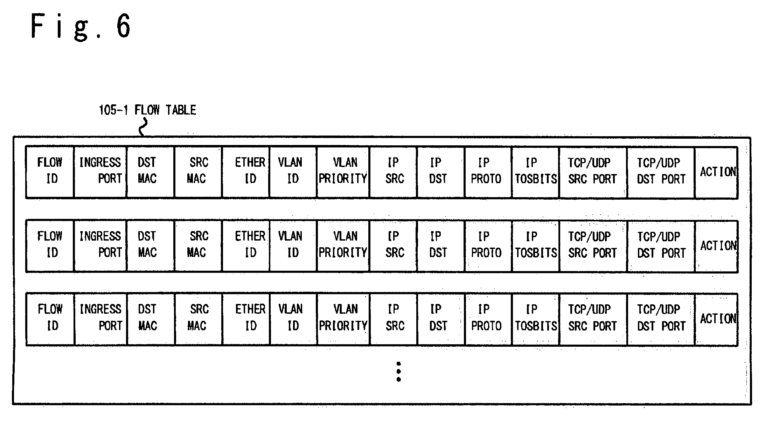

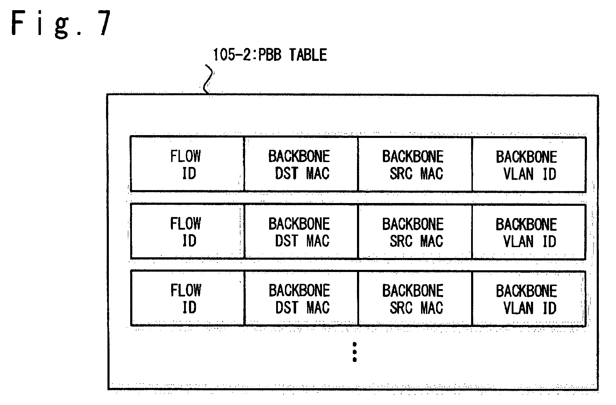

FIG. 3 is a block diagram showing details of the storage section 105. In the storage section 105, the flow table 105-1 shown in FIG. 6 and a PBB table 105-2 shown in FIG. 7 are stored.

First, an entry in which a search key for each flow and processing (action) are related, is stored in the flow table 105-1. Flow ID indicates an identifier of a flow as described above. Ingress Port indicates an input port of a frame. The "dst MAC" indicates a destination MAC address of a frame. The "src MAC" indicates a source MAC address of a frame. Ether ID indicates an Ether type of a frame. VLAN ID indicates a VLAN ID of a frame. VLAN priority indicates a priority of a frame. IP src indicates a source IP (Internet Protocol) address of a frame. IP dst indicates a destination IP address of a frame. IP Proto indicates an IP protocol type of a frame. IP ToS bits indicates IP ToS (Type of Service) of a frame. TCP/UDP src port indicates a source port number of TCP/UDP (Transmission Control Protocol/User Datagram Protocol) of a frame. TCP/UDP dst port indicates a destination port number of TCP/UDP of a frame. Action indicates processing details for a corresponding frame.

For example, a source MAC address, a destination MAC address, and a VLAN-ID (Virtual Local Area Network Identifier) can be selected as a search key of a flow. It should be noted that the flow table 105-1 corresponds to a flow table in the OpenFlow.

As shown in FIG. 7, a Flow ID, a destination B-MAC address, a source B-MAC address, and a B-VID are stored in the PBB table 105-2.

The control server interface section 106 is an interface for communication between the switch 100 and the control server 110. In the OpenFlow, communication through a secure channel is performed.

The OpenFlow network interface section 107 is a communication interface with a node (the switch 120 in FIG. 1) on a network (the network 150 in FIG. 1) to which the OpenFlow is applied.

The network interface section 108 is a communication interface with networks (the network 160 and the network 170 in FIG. 1) other than an OpenFlow network.

The measuring section 101, the measurement result notifying section 102, the adding section 103, the processing section 104, the control server interface section 106, the OpenFlow network interface section 107, and the network interface section 108 may be implemented in hardware, or may be implemented in a combination of software and a processing unit for executing the software. Software to be implemented may be installed in the switch 100 by using a non-transitory recording medium 100a for storing the software. The storage section 105 may be implemented as any storage device like a semiconductor memory.

### (Functions of sections of control server)

The control server 110 includes a route calculating section 111, a route transferring section 112, and a control data storage section 113.

The route calculating section 111 refers to the control data storage section 113, and calculates a route of a flow based on given algorithm in accordance with received data. More in detail, the route calculating section 111 firstly receives a measurement result of a communication state or a packet-in message from the switch 100. Next, the route calculating section 111 refers to topology data and so forth of the network 150 stored in the control data storage section 113, and calculates an appropriate flow route based on the given algorithm. Any algorithm may be used for the route calculation.

The route transferring section 112 notifies a processing rule corresponding to a route calculated by the route calculating section 111 to the storage section 105 in each switch on the route through the control server interface section 106. At the same time, the route transferring section 112 notifies data necessary for encapsulation of a PBB header (e.g. a destination B-MAC address, a source B-MAC address, and a B-VID) to the switch 100. This operation corresponds to "Flow_mod" in the OpenFlow.

FIG. 4 is a block diagram showing details of the control data storage section 113. The control data storage section 113 includes a topology table 113-1, a communication state table 113-2, and a MAC search table 113-3.

In the topology table 113-1, topology data of the network 150 controlled by the control server 110 is stored. In the communication state table, a communication state for each communication route (flow) is stored. The topology table 113-1 will not be described in detail, because it may have any data structure.

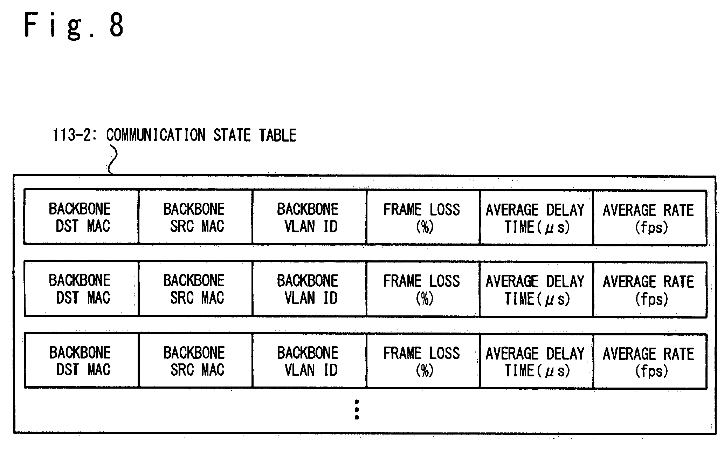

FIG. 8 shows details of the communication state table 113-2. In the communication state table 113-2, a Frame Loss, an Average Delay Time, and an Average Rate are stored in addition to a destination B-MAC address, a source B-MAC address, and a B-VID. The Frame Loss, of which unit is %, indicates a frame loss rate of a corresponding route. The Average Delay Time, of which unit is µs (micro second), indicates a frame average delay time of a corresponding route. An Average Rate indicates an average reception rate of frames on a corresponding route, of which unit is fps (frame per second).

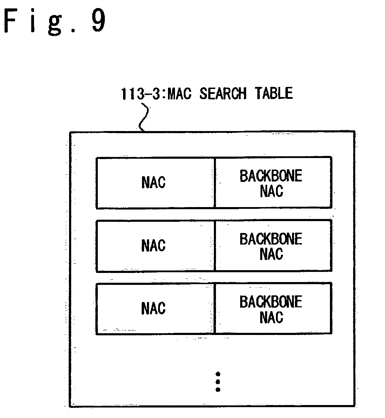

FIG. 9 shows details of the MAC search table 113-3. The MAC search table 113-3 relates and stores MAC included in a reception frame from outside the network 150 and a B-MAC address for the PBB used in the network 150. The MAC search table 113-3 is generated when the network 150 is established.

The route calculating section 111 and the route transferring section 112 may be implemented in hardware, or may be implemented as a combination of software and a processing unit for executing the software. Software to be implemented may be installed on the control server 110 by using a non-transitory recording medium 110a for storing the software. The control data storage section 113 may be implemented as any storage device such as an HDD (hard disc drive) and a semiconductor memory.

### (Operation)

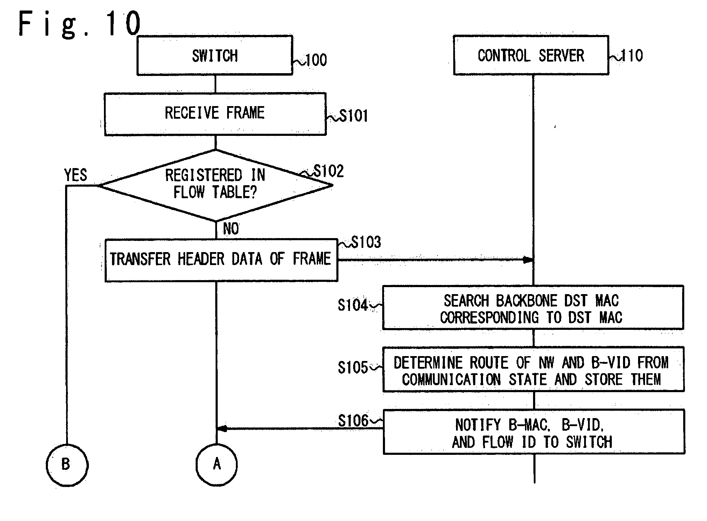

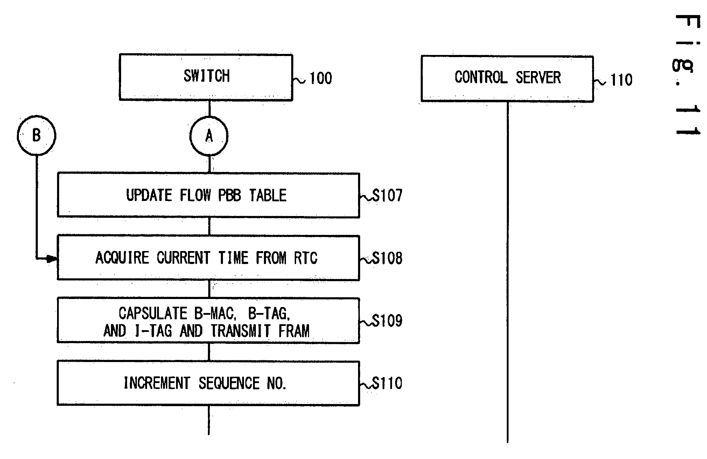

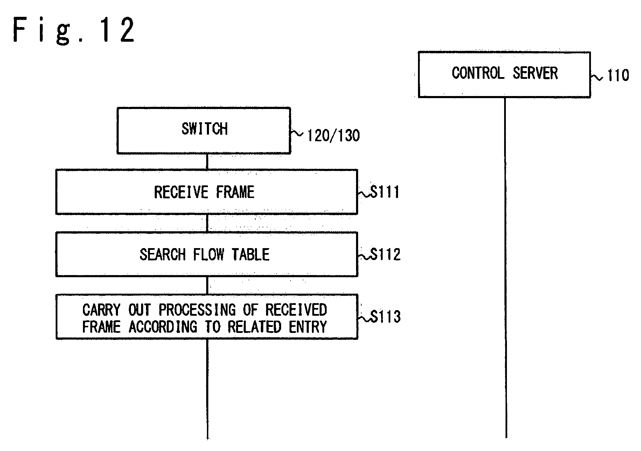

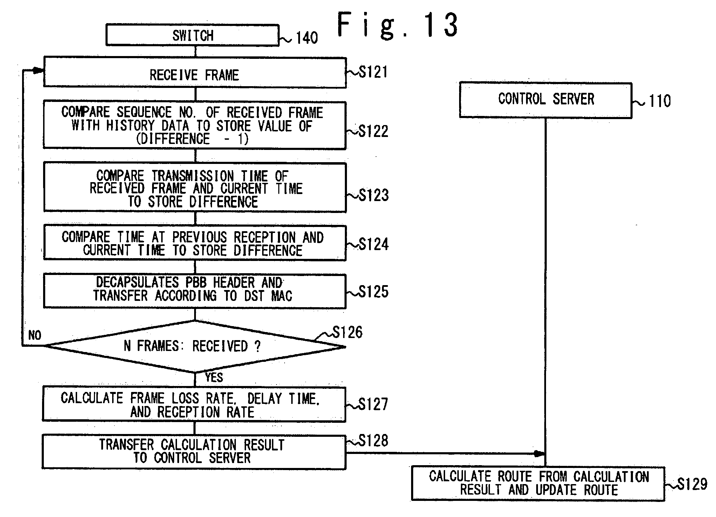

An operation according to the present exemplary embodiment will be described in detail with reference to FIG. 10 to FIG. 13. FIG. 10 and FIG. 11 are sequence diagrams showing the operation of the switch 100 as the entry edge node, and the control server 110. FIG. 12 is a sequence diagram showing the operation of the switch 120, the switch 130, and the control server 110. FIG. 13 is a sequence diagram showing the operation of the switch 140 as the exit edge node, and the control server 110.

### (Operation of entry edge node)

First of all, the operation of the switch 100 as the entry edge node of the network 150 will be described with reference to FIG. 10 and FIG. 11. First, the switch 100 receives a frame from a node in the network 160 (not shown) (FIG. 10: step S101). The format of a frame received here (a reception frame, hereinafter) corresponds to the "original data" of the frame format shown in FIG. 5.

Next, the processing section 104 searches the flow table 105-1 for an entry corresponding to the reception frame, by using data stored in a header of the reception frame as a key (FIG. 10: step S102). When the corresponding entry exists as a result of the search, a step S108 in FIG. 11 which will be described later, is performed next. When no corresponding entry exists as a result of the search, header data of the reception frame is transferred to the control server 110 (FIG. 10: step S103).

Next, in the control server 110, a corresponding destination B-MAC address is searched for, by using a destination MAC address (dst MAC) stored in the header data of the reception frame as a key (FIG. 10: step S104).

Next, the route calculating section 111 determines a route based on the header data of the reception frame, a communication state of a relevant route and so on by using given algorithm. The determined route is stored in the communication state table 113-2 (FIG. 10: step S105).

The route transferring section 112 notifies a processing rule corresponding to the determined route to the flow table 105-1 of each switch on the route. At the same time, the route transferring section 112 notifies a source B-MAC address, a destination B-MAC address, a B-VID, and a Flow ID of the determined route to the PBB table 105-2 (FIG. 10: step S106).

Next, the switch 100 updates the flow table 105-1 and the PBB table 105-2 based on the data notified at the step S106 (FIG. 11: step S107).

After updating each table, the adding section 103 acquires the current time from the RTC (FIG. 11: step S108), and encapsulates a B-MAC, a B-TAG, and an I-TAG to transmit a frame (FIG. 11: step S109).

Finally, a sequence number is incremented and stored in the switch 100.

### (Operation of relay node)

Next, an operation of the switch 120 as a relay node in the network 150 will be described with reference to FIG. 12. Description of the operation of the switch 120 will be given below, and the switch 130 operates in the same way.

First, the switch 120 receives a frame from the switch 100 (FIG. 12: step S111). Next, the processing section 104 searches the flow table 105-1 (FIG. 12: step S112). When a related entry exists, processing of the reception frame is performed in accordance with the entry (FIG. 12: step S113). In the present exemplary embodiment, processing to transfer the reception frame to the next switch (the switch 130) on a transfer route is given. An inquiry is made to the control server 110 when the related entry does not exist. In this case, because it is presupposed that the related entry is already set, the description is omitted.

### (Operation of exit edge node)

Finally, an operation of the switch 140 as the exit edge node in the network 150 will be described with reference to FIG. 13.

First, the switch 140 receives a frame from the switch 130 (FIG. 13: step S121).

Next, the measuring section 101 compares a sequence number stored in the reception frame with a history of sequence numbers stored in the switch 140, and stores a value of (a difference - 1) (FIG. 13: step S122).

The measuring section 101 compares transmission time data stored in the reception frame with the current time data acquired from the RTC, and stores a difference (FIG. 13: step S123).

The measuring section 101 compares the time data stored at the time of the previous frame reception with the current time data acquired from the RTC, and stores a difference (FIG. 13: step S124).

Next, the processing section 104 decapsulates the PBB header of the reception frame, and transfers the PBB header to a corresponding node of the network 170 in accordance with a destination MAC address stored in the original data after the decapsulation (FIG. 13: step S125).

After the operation up to the step S125, the switch 140 determines whether N frames of the same flow have been received (FIG. 13: step S126). N, is an optional value, and may be inputted by an operator of the network 150 who operates the control server 110, for example. A step S127 is performed when the N frames of the same flow have been received. When N frames of the same flow have not been received, the step S127 is not performed until a frame is received again.

When it is determined at the step S126 that the N frames of the same flow have been received, the step S127 is performed. At the step S127, the measuring section 101 calculates a frame loss rate, an average delay time, and an average reception rate from a sequence number and transmission time data.

Here, the frame loss rate is calculated by dividing a summation of values, in the history, of (a difference -1) of sequence numbers stored at the step S122, by the number N of reception frames. An average delay time is calculated by dividing a summation of time differences, in a history, stored at the step S123, by the number N of reception frames. An average reception rate is calculated by dividing a reciprocal number of time difference stored at the step S124, by the number N of reception frames.

Finally, in the switch 140, the measurement result notifying section 102 transfers the measurement result calculated at the step S127 to the control server 110 (step S128).

In the control server 110 which has received the measurement result, the route calculating section 111 calculates a route based on a given algorithm by referring to the control data storage section 113, and stores the calculated route in the topology table 113-1 and the communication state table 113-2 (step S129).

Here, a method of determining whether each switch is an entry edge node or an exit edge node will be described.

There are various methods of determining whether a certain switch is an entry edge node. For example, there is a method in which a specific field of a reception frame is referred to. For example, as in the present exemplary embodiment, when the PBB is applied, a tag called S-TAG (Service VLAN Tag) is given to the original data in FIG. 5 (not shown in FIG. 5). By referring to the tag, a switch can determine whether the switch is an entry edge node. There is also another method to determine whether a connection destination of a port which receives the frame is the switch which has the same function, by using an LLDP (Link Layer Discovery Protocol). It is also possible to employ another method to give a notice of the fact that a corresponding switch is an entry edge node, from the control server 110, by using the fact that the control server 110 knows the topology.

Next, a destination B-MAC address of a reception frame should be referred to, in order to determine whether or not a certain switch is an exit edge node. When the destination B-MAC address of the reception frame is coincident with a MAC address of the switch, the switch can determine that the switch itself is an exit edge node.

### (Effect)

As described above, according to the present exemplary embodiment, when the entry edge node of a network receives a frame, communication state measurement data is added, and a communication state is measured at an exit edge node to notify the control server, and a route is updated by the control server.

Through the operation, the control server can monitor the state of a network. As a result, it is possible to perform high-speed route switching in response to occurrence of a failure and lowering of line quality.

### [Second Exemplary Embodiment]

### (Configuration and operation)

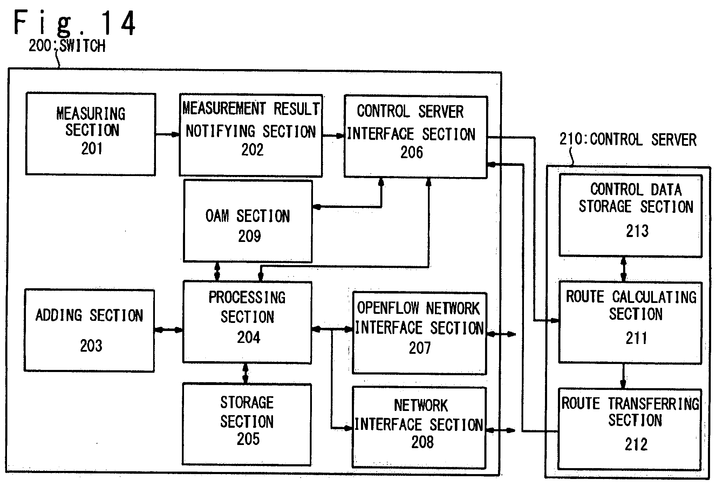

A second exemplary embodiment of the present invention will be described below in detail with reference to FIG. 14. FIG. 14 is a block diagram showing a configuration of a system according to the present exemplary embodiment.

A system according to the present exemplary embodiment includes a switch 200 and a control server 210. The configuration of a network is the same as in FIG. 1, and the switches and the control server are replaced by those of FIG. 14.

The switch 200 includes a measuring section 201, a measurement result notifying section 202, an adding section 203, a processing section 204, a storage section 205, a control server interface section 206, an OpenFlow network interface section 207, a network interface section 208, and an OAM section 209. The sections other than the OAM section 209 are the same as the sections of the switch 100 in the first exemplary embodiment shown in FIG. 2 and the description is omitted. The OAM section 209 will be described later. Like the first exemplary embodiment, the measuring section 201, the measurement result notifying section 202, the adding section 203, the processing section 204, the control server interface section 206, the OpenFlow network interface section 207, the network interface section 208, and the OAM section 209 may be implemented in hardware, or may be implemented as a combination of software and a processing unit for executing the software. A software program to be implemented may be installed in the switch 200 by using a non-transitory recording medium 200a for storing the software. The storage section 205 may be implemented as any storage device like a semiconductor memory.

The control server 210 includes a route calculating section 211, a route transferring section 212, and a control data storage unit 213. Like the switch 200, the configuration of the control server 210 is the same as the configuration of the control server 110 in the first exemplary embodiment shown in FIG. 2, and the description thereof is omitted. The route calculating section 211 and the route transferring section 212 may be implemented in hardware, or may be implemented as a combination of software and a processing unit for executing the software. A software program to be implemented may be installed in the control server 210 by using the non-transitory recording medium 210a for storing the software program. The control data storage unit 213 may be implemented as any storage device such as an HDD (hard disc drive) and a semiconductor memory.

The OAM section 209 will be described below. The OAM section 209 monitors a communication state of a route which is not registered in the storage section 205. Ether-OAM (Operation, Administration, Maintenance) disclosed in Non-Patent Literature 2 can be used for the OAM section 209, for example. As disclosed in Non-Patent Literature 2, the Ether-OAM is proposed as recommendation by the ITU-T (International Telecommunication Union Telecommunication Standardization Sector). More in detail, a function of the OAM section 209 can be achieved by using a function called CC (Continuity Check) of the Ether-OAM.

The operation of the OAM section 209 when the Ether-OAM is used will be described below. The OAM section 209 periodically transmits and receives a CC frame to and from a route specified by the control server 210 through the control server interface section 206. The CC frame is encapsulated in the processing section 204 and transmitted through the OpenFlow network interface section 207. By handling the CC frame in the same way as the PBB frame in the first exemplary embodiment, the OAM section 209 measures a communication state of a route which is not registered in the storage section 205. The operation after receiving the CC frame is almost the same as the operation shown in FIG. 10 to FIG. 13 of the first exemplary embodiment and the description is omitted.

### (Effect)

According to the present exemplary embodiment as described above, the OAM section 209 measures the communication state of the route which is not registered in the switch 200.

Through this operation, the control server can know the communication state of the route which is not registered in each switch on the network. As a result, the control server can monitor the communication state of optional route of the network, and high-speed route change can be performed in response to occurrence of a failure or lowering of line quality.

### [Third Exemplary Embodiment]

### (Configuration and operation)

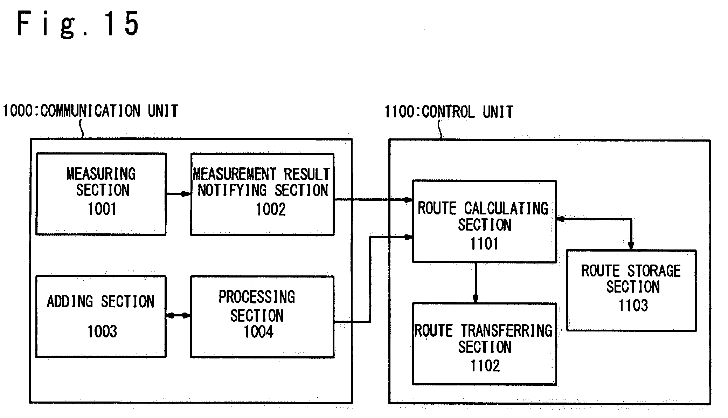

A third exemplary embodiment of the present invention will be described below in detail with reference to FIG. 15.

FIG. 15 is a block diagram showing a system configuration of the present exemplary embodiment.

The system according to the present exemplary embodiment includes a communication unit 1000 and a control unit 1100. Though not shown in FIG. 15, the communication unit 1000 and the control unit 1100 belong to a network.

The communication unit 1000 includes a measuring section 1001, a measurement result notifying section 1002, an adding section 1003, and a processing section 1004.

The measuring section 1001 measures a communication state based on communication state measurement data when the communication unit 1000 is an entry edge node of the network.

The measurement result notifying section 1002 notifies the measurement result of the communication state to the control unit 1100 by the measuring section 1001, when the communication unit 1000 is an exit edge node of the network.

The adding section 1003 adds communication state measurement data to a frame which the communication unit 1000 receives.

The processing section 1004 refers to identification data of the received frame and performs processing of the received frame in accordance with a processing rule which relates the identification data of a frame and processing for the frame.

It should be noted that like the first exemplary embodiment, the measuring section 1001, the measurement result notifying section 1002, the adding section 1003, and the processing section 1004 may be implemented in hardware, or may be implemented as a combination of a software program and a processing unit for executing the software program. The software program to be implemented may be installed on the communication unit 1000 by using the non-transitory recording medium 1000a for storing the software program.

The control unit 1100 includes a route calculating section 1101, a route transferring section 1102, and a route storage section 1103.

The route calculating section 1101 calculates a route from the measurement result received from the communication unit 1000.

The route transferring section 1102 sets a processing rule of a frame to transferring units on a route based on a route stored in the route storage section 1103.

The route storage unit 1103 stores a route calculated by the route calculating section 1101.

The route calculating section 1101 and the route transferring section 1102 may be implemented in hardware, or may be implemented as a combination of a software program and a processing unit for executing the software program. The software program to be implemented may be installed on the control unit 1100 by using the non-transitory recording medium 1100a for storing the software program. The route storage section 1103 may be implemented as an optional storage device such as an HDD (hard disc drive) and a semiconductor memory.

### (Effect)

According to the present exemplary embodiment as described above, the adding section 1003 of the communication unit 1000 adds communication state measurement data, and the measuring section 1001 measures a communication state, to notify a measurement result to the control unit 1100.

Through the above operation, high-speed route switching by the control server is possible in accordance with the communication state of a network.

## Claims

1. A communication unit for use in an OpenFlow network, comprising:
an adding section (103) adapted to add communication state measurement data to a reception frame;
a measuring section (101) which measures a communication state based on the communication state measurement data;
a measurement result notifying section (102) which notifies a measurement result of the communication state to a control unit controlling said network; and
a processing section (104) which refers to identification data of the reception frame to perform processing of the reception frame defined in a processing rule relating the identification data of the reception frame and processing for the reception frame.

2. The communication unit according to claim 1, wherein measurement result of the communication state includes at least one of a frame loss rate, an average delay time, and an average reception rate on a communication route of the reception frame.

3. The communication unit according to claim 1 or 2, wherein the communication state measurement data includes a sequence number of the reception frame and transmission time data of the reception frame in a communication unit as a transmission source of the reception frame.

4. The communication unit according to any of claims 1 to 3, wherein said adding section (103) adds the communication state measurement data to the reception frame when the reception frame is received from an external network.

5. The communication unit according to any of claims 1 to 4, wherein said adding section (103) adds identifier data of an entry edge node of said network to which said communication unit belongs, and identifier data of an exit edge node of said network, to the reception frame.

6. The communication unit according to claim 5, wherein said measuring section (101) measures the communication state when the identifier data of said exit edge node of said network to which said communication unit belongs, is the identifier data of said communication unit in which said measuring section is present.

7. The communication unit according to any of claims 1 to 6, wherein said adding section (103) encapsulates the communication state measurement data as a PBB (Provider Backbone Bridge) header.

8. A communication system comprising:
the communication unit according to any of claims 1 to 7;
a control unit (110), which comprises:
a route calculating section (111) which calculates a route of the reception frame from the measurement result received from said communication unit;
a route storage section (113) which stores the calculated route; and
a route transferring section (112) which sets the processing rule of the frame to said communication unit on the calculated route based on the calculated route stored in said route storage section.

9. A communication method for use in an OpenFlow network comprising:
adding data for measurement of a communication state to a reception frame by an entry edge node of said network;
measuring the communication state based on the communication state measurement data by an exit edge node of said network;
notifying a measurement result of the communication state to a control unit which controls said network; and
referring to identification data of the reception frame to perform processing of the reception frame defined in a processing rule which relates the identification data of the reception frame and processing for the reception frame.

10. A non-transitory recording medium in which a program is stored which makes a communication unit which for use in an OpenFlow network execute a communication process, which comprises:
adding data for measurement of a communication state to a reception frame;
measuring the communication state based on the communication state measurement data;
notifying a measurement result of the communication state to a control unit which controls said network; and
referring to identification data of the reception frame to perform processing of the reception frame defined in a processing rule which relates the identification data of the reception frame and processing for the reception frame.

## Patentansprüche

1. Kommunikationseinheit zur Verwendung in einem OpenFlow-Netzwerk, umfassend:
einen Hinzufüge-Abschnitt (103), der zum Hinzufügen von Kommunikationszustandsmessdaten zu einem Empfangsframe ausgeführt ist;
einen Messabschnitt (101), der einen Kommunikationszustand auf Basis der Kommunikationszustandsmessdaten misst;
einen Messergebnismitteilungsabschnitt (102), der einer Steuereinheit, die das genannte Netzwerk steuert, ein Messergebnis des Kommunikationszustands mitteilt; und
einen Verarbeitungsabschnitt (104), der sich auf Erkennungsdaten des Empfangsframes bezieht, um das Verarbeiten des Empfangsframes, das in einer Verarbeitungsregel definiert ist, die die Erkennungsdaten des Empfangsframes und Verarbeiten für den Empfangsframe in Zusammenhang bringt.

2. Kommunikationseinheit nach Anspruch 1, wobei das Messergebnis des Kommunikationszustands wenigstens eine von einer Frameverlustrate, einer durchschnittlichen Verzögerungszeit und einer durchschnittlichen Empfangsrate auf einem Kommunikationsweg des Empfangsframes beinhaltet.

3. Kommunikationseinheit nach Anspruch 1 oder 2, wobei die Kommunikationszustandsmessdaten eine Sequenznummer des Empfangsframes und Übertragungszeitdaten des Empfangsframes in einer Kommunikationseinheit als eine Übertragungsquelle des Empfangsframes beinhalten.

4. Kommunikationseinheit nach einem der Ansprüche 1 bis 3, wobei der genannte Hinzufügeabschnitt (103) die Kommunikationszustandsmessdaten zu dem Empfangsframe hinzufügt, wenn der Empfangsframe aus einem externen Netzwerk empfangen wird.

5. Kommunikationseinheit nach einem der Ansprüche 1 bis 4, wobei der genannte Hinzufügeabschnitt (103) Kennungsdaten eines Einstiegsrandknotens des genannten Netzwerks, zu dem die genannte Kommunikationseinheit gehört, und Kennungsdaten eines Austrittsrandknotens des genannten Netzwerks zu dem Empfangsframe hinzufügt.

6. Kommunikationseinheit nach Anspruch 5, wobei der genannte Messabschnitt (101) den Kommunikationszustand misst, wenn die Kennungsdaten des genannten Austrittsrandknotens des genannten Netzwerks, zu dem die genannte Kommunikationseinheit gehört, die Kennungsdaten der genannten Kommunikationseinheit sind, in der sich der genannte Messabschnitt befindet.

7. Kommunikationseinheit nach einem der Ansprüche 1 bis 6, wobei der genannte Hinzufügeabschnitt (103) die Kommunikationszustandsmessdaten als einen PBB- (Provider Backbone Bridge) -Kopf zusammenfasst.

8. Kommunikationssystem, umfassend:
die Kommunikationseinheit nach einem der Ansprüche 1 bis 7;
eine Steuereinheit (110), die aufweist:
einen Wegberechnungsabschnitt (111), der einen Weg des Empfangsframes anhand des von der genannten Kommunikationseinheit empfangenen Messergebnisses berechnet;
einen Wegspeicherabschnitt (113), der den berechneten Weg speichert; und
einen Wegübertragungsabschnitt (112), der die Verarbeitungsregel des Frames auf der Basis des berechneten Wegs, der in dem genannten Wegspeicherabschnitt gespeichert wird, auf die genannte Kommunikationseinheit auf dem berechneten Weg einstellt.

9. Kommunikationsverfahren zur Verwendung in einem OpenFlow-Netzwerk, umfassend:
Hinzufügen von Daten zur Messung eines Kommunikationszustands zu einem Empfangsframe durch einen Eintrittsrandknoten des genannten Netzwerks;
Messen des Kommunikationszustands auf der Basis der Kommunikationszustandsmessdaten durch einen Austrittsrandknoten des genannten Netzwerks;
Mitteilen eines Messergebnisses des Kommunikationszustands einer Steuereinheit, die das genannte Netzwerk steuert; und
Bezugnehmen auf Erkennungsdaten des Empfangsframes zum Durchführen eines Verarbeitens des Empfangsframes, das in einer Verarbeitungsregel definiert ist, die die Erkennungsdaten des Empfangsframes und Verarbeiten für den Empfangsframe in Zusammenhang bringt.

10. Nichtflüchtiges Aufzeichnungsmedium, in dem ein Programm gespeichert ist, das eine Kommunikationseinheit zur Verwendung in einem OpenFlow-Netzwerk zum Ausführen eines Kommunikationsprozesses veranlasst, der aufweist:
Hinzufügen von Daten zur Messung eines Kommunikationszustands zu einem Empfangsframe;
Messen des Kommunikationszustands auf Basis der Kommunikationszustandsmessdaten;
Mitteilen eines Messergebnisses des Kommunikationszustands einer Steuereinheit, die das genannte Netzwerk steuert; und
Bezugnehmen auf Erkennungsdaten des Empfangsframes zum Durchführen eines Verarbeitens des Empfangsframes, das in einer Verarbeitungsregel definiert ist, die die Erkennungsdaten des Empfangsframes und Verarbeiten für den Empfangsframe in Zusammenhang bringt.

## Revendications

1. Unité de communication destinée à être utilisée dans un réseau OpenFlow, comprenant :
une section d'ajout (103) adaptée pour ajouter des données de mesure d'état de communication à une trame de réception ;
une section de mesure (101) qui mesure un état de communication en fonction des données de mesure d'état de communication ;
une section de notification de résultat de mesure (102) qui notifie un résultat de mesure de l'état de communication à une unité de commande qui commande ledit réseau ; et
une section de traitement (104) qui se réfère à des données d'identification de la trame de réception pour effectuer le traitement de la trame de réception défini dans une règle de traitement concernant les données d'identification de la trame de réception et le traitement de la trame de réception.

2. Unité de communication selon la revendication 1, dans laquelle le résultat de mesure de l'état de communication comporte au moins l'un d'un taux de perte de trame, d'un temps de retard moyen, et d'un taux de réception moyen sur une route de communication de la trame de réception.

3. Unité de communication selon la revendication 1 ou 2, dans laquelle les données de mesure d'état de communication comportent un numéro de séquence de la trame de réception et des données de temps de transmission de la trame de réception dans une unité de communication faisant office de source de transmission de la trame de réception.

4. Unité de communication selon l'une quelconque des revendications 1 à 3, dans laquelle ladite section d'ajout (103) ajoute les données de mesure d'état de communication à la trame de réception quand la trame de réception est reçue depuis un réseau externe.

5. Unité de communication selon l'une quelconque des revendications 1 à 4, dans laquelle ladite section d'ajout (103) ajoute des données d'identifiant d'un noeud limitrophe d'entrée dudit réseau auquel appartient ladite unité de communication, et des données d'identifiant d'un noeud limitrophe de sortie dudit réseau, à la trame de réception.

6. Unité de communication selon la revendication 5, dans laquelle ladite section de mesure (101) mesure l'état de communication quand les données d'identifiant dudit noeud limitrophe de sortie dudit réseau auquel appartient ladite unité de communication sont les données d'identifiant de ladite unité de communication dans laquelle est présente ladite section de mesure.

7. Unité de communication selon l'une quelconque des revendications 1 à 6, dans laquelle ladite section d'ajout (103) encapsule les données de mesure d'état de communication sous forme d'en-tête PBB (Provider Backbone Bridge).

8. Système de communication comprenant :
l'unité de communication selon l'une quelconque des revendications 1 à 7 ;
une unité de commande (110), laquelle comprend :
une section de calcul de route (111) qui calcule une route de la trame de réception à partir du résultat de mesure reçu depuis ladite unité de communication ;
une section de mémorisation de route (113) qui mémorise la route calculée ; et
une section de transfert de route (112) qui établit la règle de traitement de la trame sur ladite unité de communication sur la route calculée en fonction de la route calculée mémorisée dans ladite section de mémorisation de route.

9. Procédé de communication destinée à être utilisé dans un réseau OpenFlow comprenant :
l'ajout de données pour la mesure d'un état de communication à une trame de réception par un noeud limitrophe d'entrée dudit réseau ;
la mesure de l'état de communication en fonction des données de mesure d'état de communication par un noeud limitrophe de sortie dudit réseau ;
la notification d'un résultat de mesure de l'état de communication à une unité de commande qui commande ledit réseau ; et
la référence à des données d'identification de la trame de réception pour effectuer le traitement de la trame de réception défini dans une règle de traitement concernant les données d'identification de la trame de réception et le traitement de la trame de réception.

10. Support d'enregistrement non transitoire dans lequel est mémorisé un programme qui fait en sorte qu'une unité de communication destinée à être utilisée dans un réseau OpenFlow exécute un processus de communication, lequel comprend :
l'ajout de données pour la mesure d'un état de communication à une trame de réception ;
la mesure de l'état de communication en fonction des données de mesure d'état de communication ;
la notification d'un résultat de mesure de l'état de communication à une unité de commande qui commande ledit réseau ; et
la référence à des données d'identification de la trame de réception pour effectuer le traitement de la trame de réception définie dans une règle de traitement concernant les données d'identification de la trame de réception et le traitement de la trame de réception.
